# EUROPEAN PATENT SPECIFICATION

(11) **EP 0 153 779 B1**
(45) Date of publication and mention of the grant of the patent: **14.12.1994**
(21) Application number: 85200177.5
(22) Date of filing: 12.02.1985
(51) Int. Cl.: G06F 12/10

(54) **Data processing system provided with a memory access controller**
Datenverarbeitungsanlage mit einem Speicherzugriffssteuergerät
Système de traitement de données muni d'un dispositif de commande d'accès en mémoire

(30) Priority: 17.02.1984 US 581388
(43) Date of publication of application: 04.09.1985
(73) Proprietor: Philips Electronics N.V., 5621 BA Eindhoven (NL)
(72) Inventor: Kaplinsky, Cecil Hertz, NL-5656 AA Eindhoven (NL)
(74) Representative: Strijland, Wilfred

(56) References cited:
- GB-A- 2 090 448
- US-A- 3 693 165
- US-A- 3 848 234
- US-A- 4 300 192
- THE BELL SYSTEM TECHNICAL JOURNAL, vol. 62, no. 1, part 2, January 1983, pages 207-219, American Telephone and Telegraph Co., Murray Hill, New Jersey, US; I.K. HETHERINGTON et al.: "The 3B20D processor & DMERT operating systems"
- COMPUTING SURVEYS, vol. 14, no. 3, September 1982, pages 473-530, New York, US;A.J. SMITH: "Cache memories"
- ELECTRONIC DESIGN, vol. 32, no. 17, August 1984, pages 153-160,162,164, Waseca,MN, Denville, NJ, US; C. KAPLINSKY et al.: "Memory controller gives a microprocessor a big mini's throughput"

## Description

EP

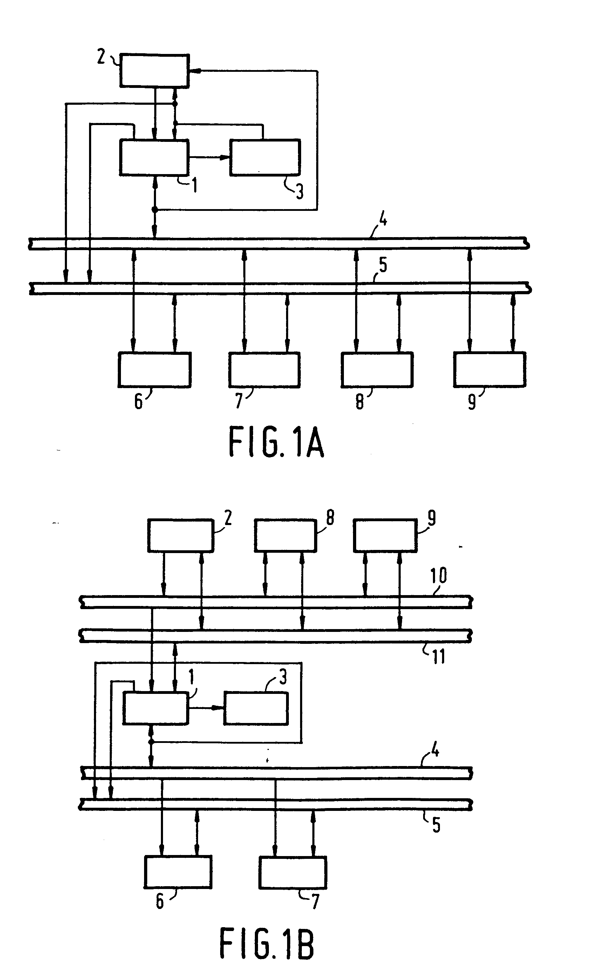

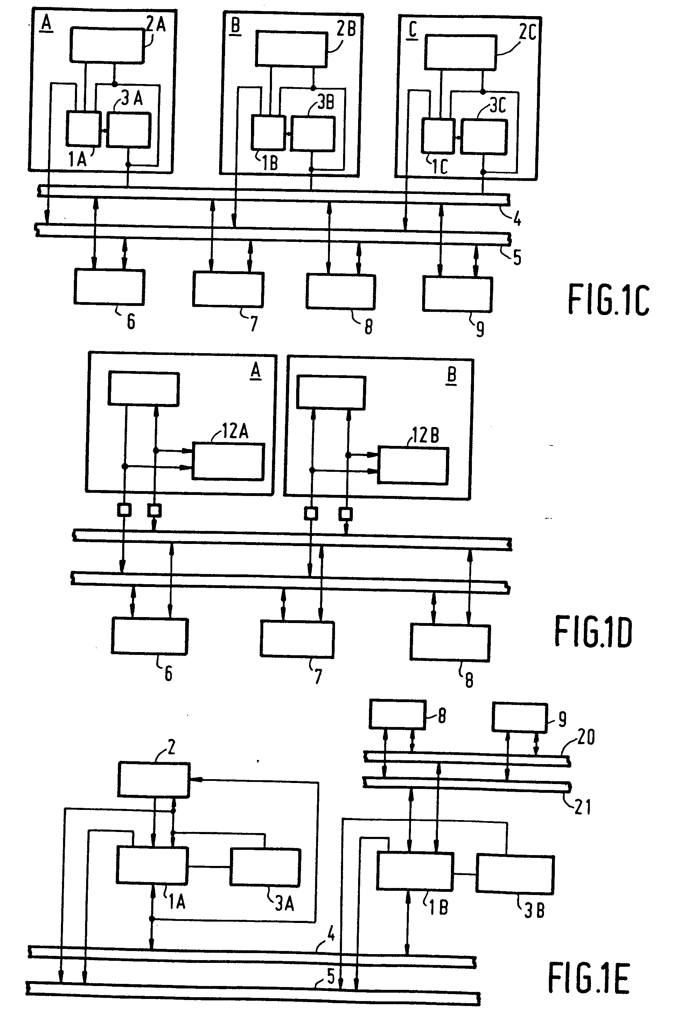

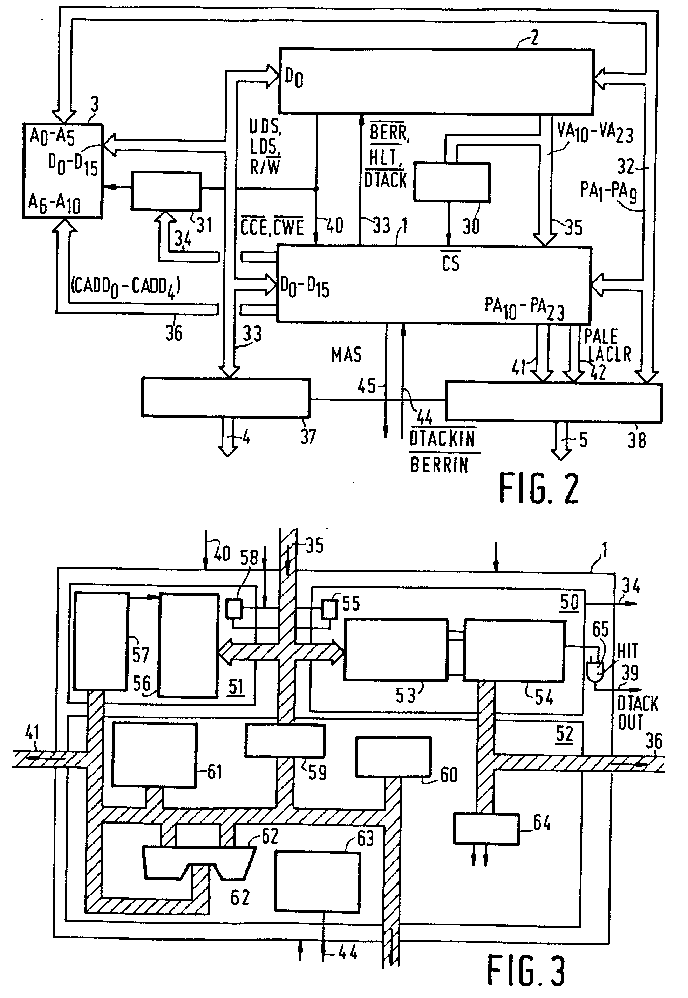

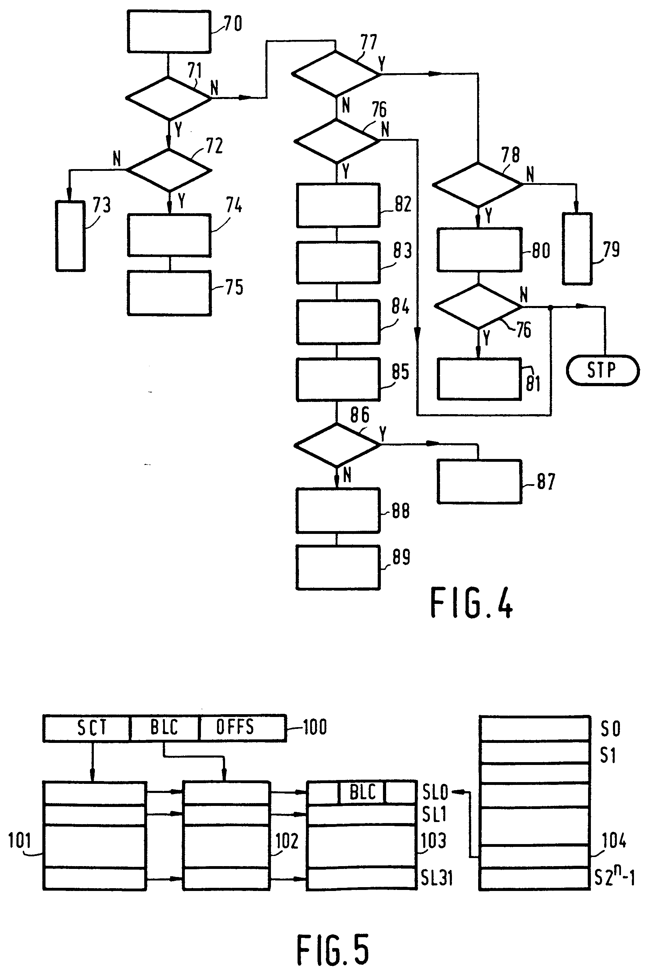

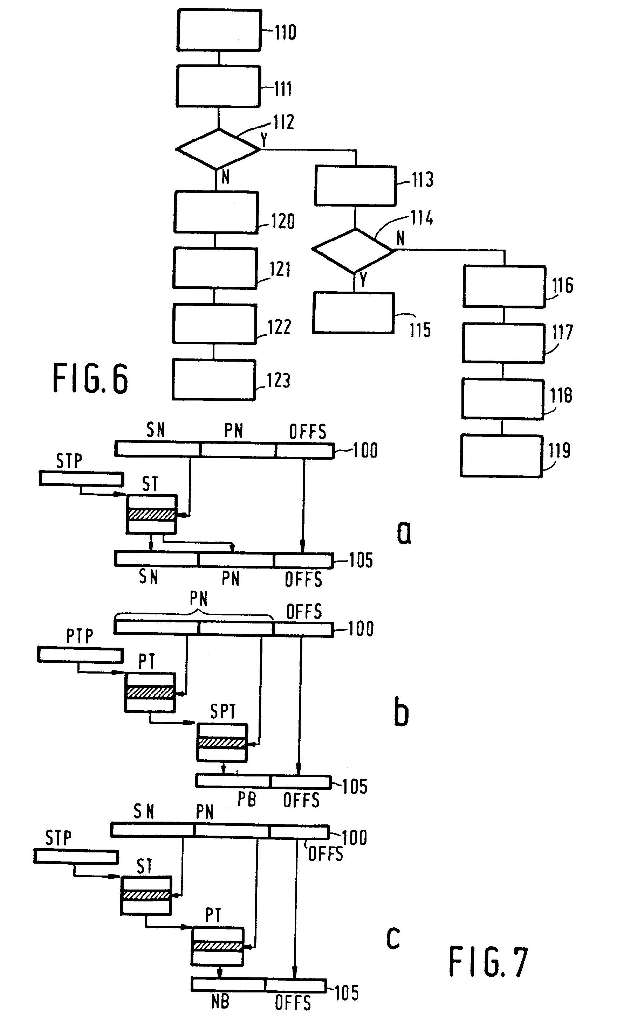

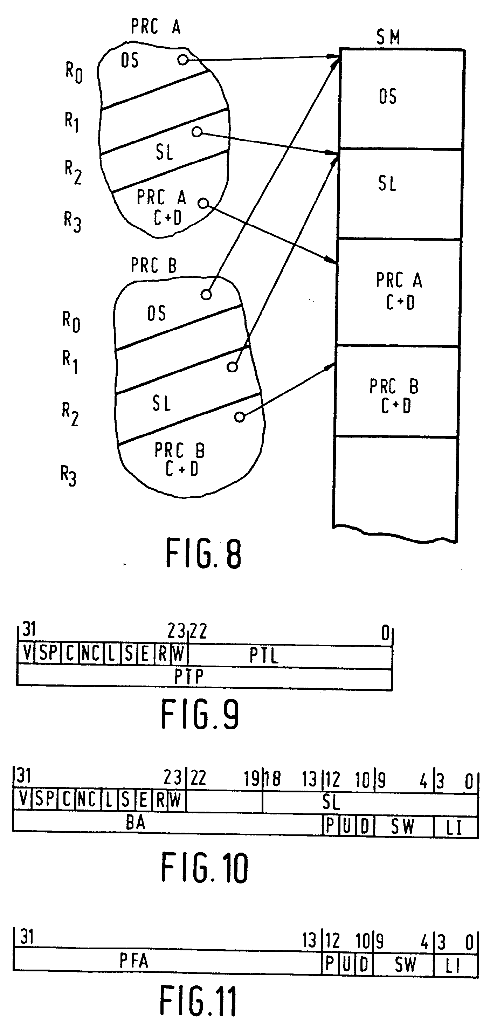

## Claims

1.

## Patentansprüche

1.

## Revendications

1.
